# EUROPEAN PATENT SPECIFICATION

(11) **EP 1 404 172 B1**
(45) Date of publication and mention of the grant of the patent: **14.02.2007**
(21) Application number: 02733105.7
(22) Date of filing: 03.06.2002
(51) Int. Cl.: A01G 9/02

(54) **CONTAINER FOR TRANSPORTATION AND/OR MAINTENANCE OF PLANTS OF MEDIUM AND LARGE SIZE**
BEHÄLTER ZUR BEFÖRDERUNG UND/ODER ZUR BEHANDLUNG VON MITTELMÄSSIGEN UND GROSSEN PFLANZEN
CONTENANT POUR LE TRANSPORT ET/OU L'ENTRETIEN DE PLANTES DE TAILLE MOYENNE ET DE GRANDE TAILLE

(30) Priority: 01.06.2001 PT 972601
(43) Date of publication of application: 07.04.2004
(73) Proprietor: Ventura Ribeiro de Matos, Antonio, 4500-806 Espinho (PT)
(72) Inventor: Ventura Ribeiro de Matos, Antonio, 4500-806 Espinho (PT)
(74) Representative: Pelayo de Sousa Henriques, Rui
(86) International application number: PCT/IB2002/001975
(87) International publication number: WO 2002/096187

(56) References cited:
- EP-A- 1 099 368
- WO-A-99/35898
- US-A- 4 325 202
- US-A- 4 715 144

## Description

### Technical domain

The present invention concerns a container particularly suited for the transportation and maintenance of plants of medium and large size.

### State of the art

The transportation and, in many cases, the maintenance of plants of small dimensions is mostly done, for centuries, in vases/pots.

The traditional vases are made of ceramic materials, having been gradually replaced, in the last years, by plastic vases/pots.

In either case, their shape is traditionally that of an inverted frustum of a cone (or, sometimes, that of an inverted frustum of a pyramid) and the respective internal surface is essentially flat/smooth.

However, on the level of small vases/pots destined to arboretum/greenhouse of small plants, there are models provided with internal nerves or grooves destined to route/direct the roots to certain specific places, namely for the promotion of the radicular pruning of those roots.

An example of that type of vases/pots for arboretum/greenhouse of plants of small dimension is the one described in the document US5761848.

In the case of plants of medium dimension, practically are only used plastic vases/pots, since the ceramic vases/pots are too heavy and breakable. Still, the mentioned plastic vases/pots are essentially similar to the traditional smooth vases/pots described before.

However, in the dimensions necessary for certain plants of medium size and, mainly, for plants of large size, such vases/pots reveal a series of limitations, namely in what concerns the transportation of that type of plants.

In fact, the traditional vases/pots do not consider that in the case of plants of medium and large dimension the weight of the plants added to the one of their supporting substratum becomes considerably high. Consequently, the plastic vases/pots of the traditional shape, when made in a big size for support of plants of medium or large dimension, do not reveal dully adequate to their easy transportation and do not have the mechanical resistance necessary to stand the high demands to which they are subject, mainly during the transportation with the correspondent plants, or, when they have it, that is achieved through the significant increase of the thickness of the container's walls, with the inherent expenditure of material and the increase of the production costs.

### Objectives

The present invention, among other objectives which will become clear with the reading of this description, proposes to eliminate or reduce the inconvenients mentioned before, favouring, in particular, the transportation of the containers empty or full with the respective plants of medium or large size and correspondent substratum.

On the other hand, the respective shape is conceived to make the containers of the model according to the invention particularly adapted to the manufacture in plastic materials, allowing to conciliate the economy of these materials with a sufficiently high resistance to withstand the strong mechanical demands inherent to the significant weight of the plants and respective substratum to contain and, eventually, to transport.

Yet another objective consists in providing the vases/pots with a shape that, in the case of the manufacture with plastic materials, allows the use of production procedures other than by injection, as well as the employment of recycled plastic materials or of mixtures including recycled materials.

### Description

For that, the container for transportation and/or maintenance of plants of medium and large size according to the invention, that presents a general configuration of a frustum of a cone or a frustum of a pyramid, has, in the respective lateral part, two or more handles whose upper part is tilted relatively to the axe of the container, so that its most external portion is more proximal to the bottom and its most internal portion is more proximal to the mouth of the container; the respective bottom having one or more incisions substantially parallel to each other, wherein at least one of the respective extremes (preferably both) emerges on said lateral part; and the same lateral part also having, all around it or not, grooves that, except for the zone/region of the handles, extend from the edge involving the mouth to the bottom.

According to a preferred embodiment, the referred grooves prolong through said bottom, namely on the perimetrical zone, except where this is grooved by the referred incisions.

According to another preferred embodiment, the edge involving the mouth has a perimetrical recess of reinforcement.

Also preferentially, the handles are positioned contiguously to the down part of the edge.

In a possible embodiment, particularly destined to certain cases of maintenance of plants of medium or large size for more significant periods, there are rips on the lateral walls and/or on the bottom - preferably in both and aligned with each other in perfect continuity - developing in the proximity of the junction between said bottom and lateral wall.

According to the present invention, the referred shape is also particularly useful because it allows, in the case of the use of plastic materials or mixtures based on plastic materials, the production of the containers not only by the technique classically used in the manufacture of vases/pots, that is, the injection, but also, by other techniques such as the blow moulding (or insufflation) or the rotomoulding.

### Brief description of the figures

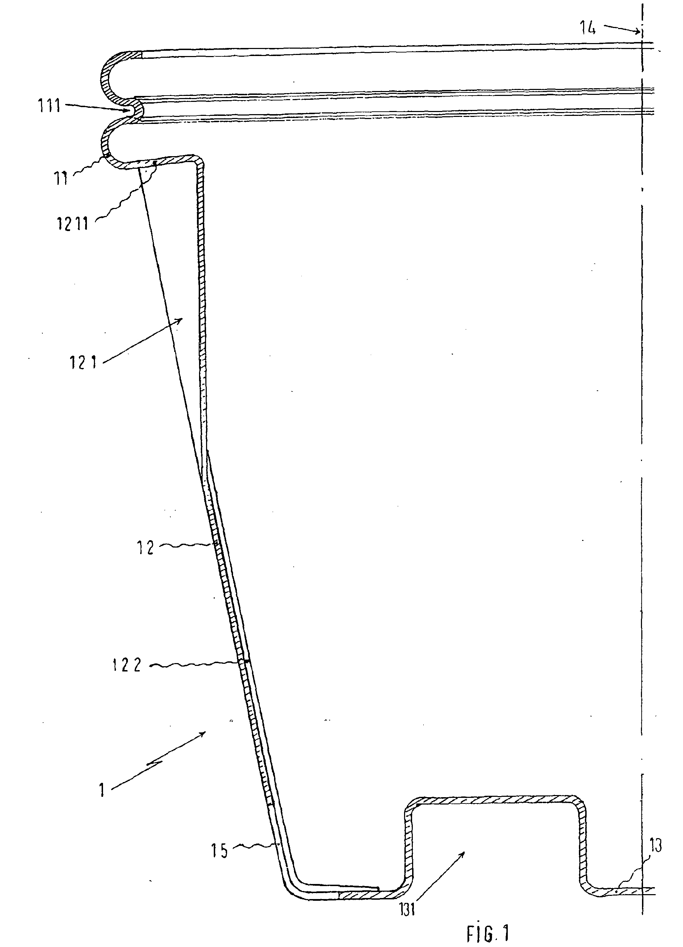

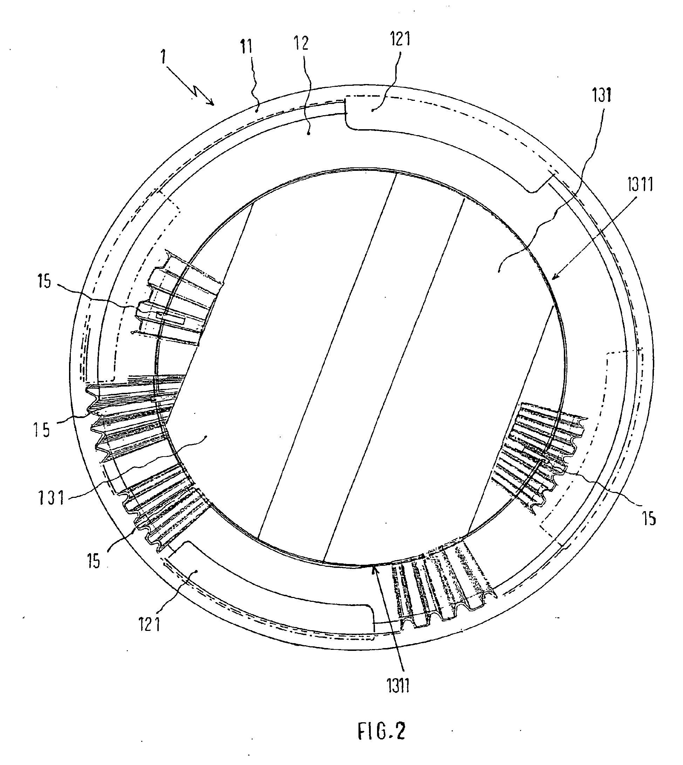

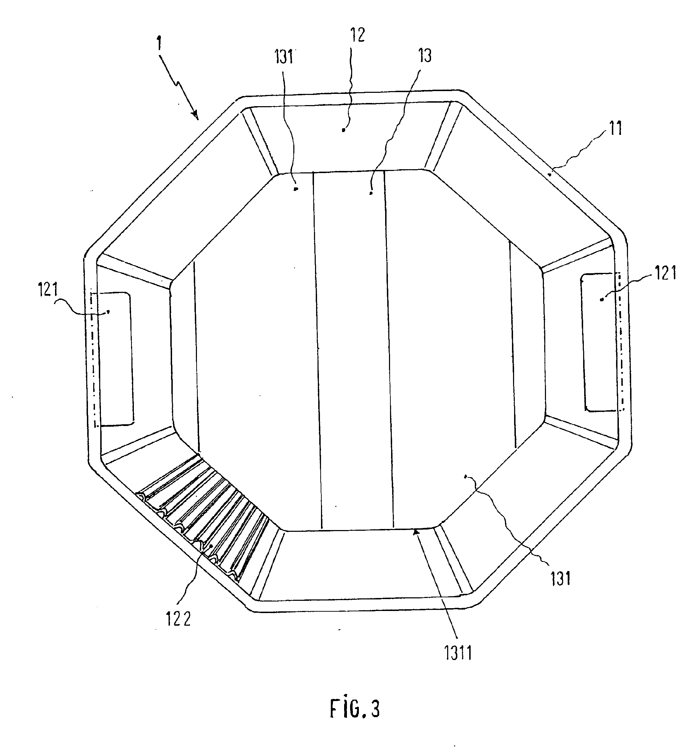

In the enclosed figures, presented as illustration and not of limiting character, are represented several embodiments of the present utility model, where we may see:
■ In figure 1, a representation, in cut, of half of a container of the type laid out in the present invention.
■ In figure 2, a representation, in upper view, of a container of the type laid out in the present invention in the case of the general configuration like a frustum of a cone.
■ In figure 3, a representation, in upper view, of a container of the type laid out in the present invention in the case of the general configuration like a frustum of a pyramid.

In said figures, the numerical references have the following correspondence:
1 - Container
   11 - Edge
      111 - Recess
   12 - Lateral part of the container
      121 - Handles
         1211 - Upper part of the handle
      122 - Grooves
   13 - Bottom of the container
      131 - Incisions
         1311 - Extremes
   14 - Axe
   15 - Rips

### Description of a particular form of embodiment

Based on the example appearing on figure 1, particularised to the case of a container with general configuration like a frustum of a cone, we verify that the transportation of the container (1) may be made easily holding by the handles (121). The inclination of the upper part avoids the sliding of the hand or of the mechanical means that eventually are employed in conjugation with a crane or analogous equipment.

In the case of transportation by fork-lift, the respective forks will easily slide through the incision(s) (131) existing on the bottom (13) of the container through its free extreme(s) (1311).

Structurally, the container is reinforced by the grooves (122) existing on the lateral wall and on the perimetrical part of the bottom (13), as well as by the recess (111) existing on the edge (11).

On the outer part of the lateral wall and down part of the bottom, between the grooves (122), there are rips (15) essentially destined to the drainage.
As may be verified by the figure 2, the handles may be in a variable number, there being represented two by a continuous line and another two optional by an interrupted line. Likewise, the shape of the grooves may be diverse, there being represented grooves in scape, triangular and rectangular. These shapes are mere examples and others may be used as long as it is beard in mind that preferably the development of the grooves must be substantially radial relatively to the axe (14) of the container.

On the other hand, the various types of grooves may exist separately in each container or may be combined among themselves in a same container and, in any of these situations, the grooves may either be positioned all around the container, or only in sectors of the same. Figure 2 exemplifies a case of combination of different types of grooves in a same container in several sectors.

The structural reinforcement allows for the manufacture with walls of lesser thickness than in the case of the traditional flat/smooth vases/pots.

It is not considered necessary to prolong further this description for anyone skilled in the art to understand the scope of the present invention and the advantages that result from it.

The materials, the shape, the dimensions and the disposition of the elements will be susceptible of changes, as long as they do not modify the essence of the invention.

The terms by which the present invention has been described must be taken in a broad and non limiting sense.

## Claims

1. - Container (1) for transportation and/or maintenance of plants of medium and large size, shaped like a frustum of a cone or a frustum of a pyramid, wherein:
- the respective lateral part (12) is provided with two or more handles (121) whose upper part (1211) is tilted relatively to the axe (14) of the container, so that its more external portion is more proximal to the bottom (13) and its more internal portion is more proximal to the mouth of the container;
- the respective bottom (13) is provided with one or more incisions (131) substantially rectilinear, that in case of plurality are substantially parallel to each other, in which at least one of the respective extremes (1311), and preferably both, emerges on said lateral part (12); and
- the surface constituting the lateral part (12) is totally or partially grooved, the grooves (122) extending from the edge (11) -and, in the portion of the handles, from their down part - until, at least, the bottom (13).

2. - Container according to claim 1, wherein the grooves (122) prolong through the bottom (13), namely through its perimetrical portion not grooved by the incisions (131).

3. - Container according to claim 1, wherein the edge (11) involving the mouth has a perimetrical recess (111).

4. - Container according to claim 1, wherein the handles (121) are located contiguously to the edge (11).

5. - Container according to claim 1, wherein there are rips (15) on the lateral wall (12) and/or on the bottom (13) - preferably in both and aligned with each other in perfect continuity - developing in the proximity of the junction between the said bottom and the wall.

6. - Method of production of the container according to anyone of the previous claims, **characterised by**, in the case of the embodiment based on plastic materials, the employment of the method of blow moulding or of the rotomoulding.

7. - Method according to the previous claim wherein the plastic materials employed are made of or include recycled material.

## Patentansprüche

1. - Behälter (1) zum Transport und zur Aufbewahrung von mittelgroßen und großen Pflanzen, der ähnlich einem Kegelstumpf oder einem Pyramidenstumpf gestaltet ist, wobei:
- der jeweilige Seitenbereich (12) mit zwei oder mehreren Handgriffen (121) versehen ist, deren oberer Abschnitt (1211) relativ zur Achse (14) des Behälters geneigt ist, so dass der weiter außen liegende Abschnitt näher zum Boden (13) und dessen weiter innen liegende Abschnitt näher zur Öffnung des Behälters liegt;
- der jeweilige Boden (13) mit einem oder mehreren, im wesentlichen geradlinigen Einschnitten (131) versehen ist, die im Fall von mehreren Einschnitten im wesentlichen parallel zueinander verlaufen, und wobei mindestens eines der jeweiligen Enden (1311) und vorzugsweise beide an diesem seitlichen Abschnitt (12) auslaufen; und
- die Fläche, die den seitlichen Abschnitt (12) bildet, vollständig oder teilweise Rinnen aufweist, wobei diese Rinnen (122) sich von dem Rand (11) - und im Bereich der Handgriffe von ihrem unteren Abschnitt - bis mindestens zu dem Boden (13) erstrecken.

2. - Behälter nach Anspruch 1, bei dem die Rinnen (122) durch den Boden (13) verlängert sind, nämlich durch dessen äußeren, nicht durch die Einschnitte (131) gefurchten Bereich.

3. - Behälter nach Anspruch 1, bei dem der der Öffnung zugeordnete Rand (11) eine äußere Einschnürung (111) aufweist.

4. - Behälter nach Anspruch 1, bei dem die Handgriffe (121) angrenzend an den Rand (11) angeordnet sind.

5. - Behälter nach Anspruch 1, wobei an der Seitenwand (12) und/oder an dem Boden (13) Rippen (15) vorgesehen sind - vorzugsweise in beiden und genau fluchtend zueinander ausgerichtet -, die von dem Bereich des Überganges zwischen diesem Boden und dieser Wand ausgehen.

6. - Verfahren zur Herstellung des Behälters gemäß einem der vorhergehenden Ansprüche, **dadurch gekennzeichnet, dass** im Fall der auf Kunststoff basierenden Ausführungsform die Methode des Blasformverfahrens oder des Rotationsformverfahrens angewandt wird.

7. - Verfahren nach dem vorhergehenden Anspruch, bei dem der verwendete Kunststoff aus Recyclingmaterial besteht oder Recyclingmaterial enthält.

## Revendications

1. - Récipient (1) pour le transport et/ou manutention des plantes de port moyen et grand, tronconique ou sous la forme d'un tronc de pyramide, **caractérisé en ce que**:
- la partie latérale (12) respective est pourvue de deux ou plusieurs manches (121) dont la partie supérieure (1211) est penchée par rapport à l'axe (14) du récipient, de telle façon que sa portion plus extérieure soit plus proche du fond (13) et que sa portion plus intérieure soit plus proche de la bouche du récipient ;
- le fond (13) respectif est pourvu d'un ou plusieurs entailles (131) substantiellement rectilignes, qu'en cas de pluralité sont substantiellement parallèles entre eux, où au moins un des extrêmes respectifs (1311), et de préférence les deux, débouche sur la dite partie latérale (12); et
- la surface constituant la partie latérale (12) est totalement ou partiellement cannelée, ces cannelures (122) s'étendant dès le rebord (11) - et, dans le cas des manches, dès la partie inférieure de celles-ci - au moins jusqu'au fond (13).

2. - Récipient selon la revendication no. 1, **caractérisé en ce que** les cannelures (122) se prolongent par le fond (13), notamment par la portion périmétrique de celui-ci non sillonné par les entailles (131).

3. - Récipient selon la revendication no. 1, **caractérisé en ce que** le rebord (11) enveloppant de la bouche est pourvu d'une réentrance périmétrique (111).

4. - Récipient selon la revendication no. 1, **caractérisé en ce que** les manches (121) sont localisées tout près du rebord (11).

5. - Récipient selon la revendication no. 1, **caractérisé par** des coupures (15) dans la paroi latérale (12) et/ou fond (13) - de préférence dans les deux et alignées en parfaite continuité entre elles - se développant à la proximité de la jonction entre le fond et la paroi cités.

6. - Procédé de production du récipient selon l'une quelconque des revendications antérieures, **caractérisé en ce que**, au cas de l'implémentation basée sur des matières plastiques, on emploie la méthode du moulage par souffle ou celle de la rotomoulage.

7. - Procédé selon la revendication antérieure **caractérisé en ce que** les matières plastiques utilisées sont ou comprennent matière recyclée.
